# EUROPEAN PATENT SPECIFICATION

(11) **EP 4 350 715 B1**
(45) Date of publication and mention of the grant of the patent: **20.08.2025**
(21) Application number: 22816366.3
(22) Date of filing: 24.05.2022
(51) Int. Cl.: G21F 9/30, G21F 9/00, B06B 1/02

(54) **HIGH-INTENSITY FOCUSED ULTRASOUND APPARATUS AND METHOD FOR DECONTAMINATING SOLID RADIOACTIVE WASTE**
HOCHINTENSIVE FOKUSSIERTE ULTRASCHALLVORRICHTUNG UND VERFAHREN ZUR DEKONTAMINIERUNG VON FESTEN RADIOAKTIVEN ABFÄLLEN
APPAREIL À ULTRASONS FOCALISÉS DE HAUTE INTENSITÉ ET PROCÉDÉ DE DÉCONTAMINATION DE DÉCHETS RADIOACTIFS SOLIDES

(30) Priority: 31.05.2021 KR 20210070361
(43) Date of publication of application: 10.04.2024
(73) Proprietor: Enesg Co., Ltd., Daejeon 34026 (KR); Kepco Nuclear Fuel Co., Ltd., Daejeon 34057 (KR)
(72) Inventor: SEONG, Unhak, Changwon-si, Gyeongsangnam-do 51498 (KR); SHIN, Jungcheol, Daejeon 34022 (KR); CHO, Namchan, Daejeon 34010 (KR); PARK, Jungseok, Sejong 30124 (KR); PARK, Chanjun, Daejeon 35247 (KR); JOO, Yeongjong, Daejeon 34085 (KR); HONG, Jeonghwan, Daejeon 34022 (KR); KIM, Kitae, Daejeon 34018 (KR); RYU, Jichang, Daejeon 34032 (KR)
(74) Representative: Gille Hrabal Partnerschaftsgesellschaft mbB Patentanwälte
(86) International application number: PCT/KR2022/007337
(87) International publication number: WO 2022/255707

(56) References cited:
- CN-A- 104 409 126
- CN-U- 201 537 610
- JP-A- 2014 010 041
- KR-A- 20060 060 811
- KR-A- 20060 060 811
- KR-A- 20210 058 494
- KR-B1- 100 949 301
- KR-B1- 100 949 301
- KR-B1- 102 193 219
- KR-B1- 102 318 179
- US-B2- 7 811 525
- US-B2- 8 881 592

## Description

### [Technical Field]

The present invention relates to an apparatus and method for decontaminating solid radioactive waste contaminated by radiation.

### [Background Art]

Radioactive waste contaminated by radiation is generated in nuclear power plants, nuclear fuel production and nuclear cycle facilities, hospitals and industries using radiation sources, etc.

In particular, when facilities installed in nuclear power plants or nuclear fuel production facilities are replaced due to expiration, improvement, failure, or the like, a large amount of solid radioactive waste is generated.

Solid radioactive wastes such as metals, non-ferrous metals, plastics, and concrete are decontaminated by a physical or chemical method to lower the radioactive level thereof, and then sent to a storage facility which stores low-level and middle-level radioactive wastes. Solid radioactive waste, which is completely decontaminated, may be recycled.

In the related art, an ultrasonic method or a physical method is used for decontaminating solid radioactive waste.

However, ultrasonic decontamination methods of the related art are cleaning-level decontamination methods using normal ultrasonic waves and thus have a poor decontamination effect on solid radioactive wastes into which fine radioactive particles have penetrated deep or solid radioactive wastes having uneven complex shapes.

Therefore, there is a need for a high-intensity focused ultrasound decontamination apparatus capable of increasing cleaning intensity by focusing ultrasonic waves.

### (Prior Art Document)

### (Patent Document)

Korean Patent Registration No. 10-1173276
KR 2006 006 0811 discloses a radioactive decontamination device with all features of the preamble of the independent claim 1 of this invention.
KR 100 949 301 B1 discloses a device for decontaminating radioactive metal waste to separate a radioactive material included in the decontamination solution by evaporating the decontamination solution after a decontamination process.
US 7 811 525 B2 discloses a device for using acoustic energy. In some embodiments, a fluid bath may be provided in the system, where the fluid bath quality may be monitored using acoustic energy.
CN 104 409 126 A relates to an ultrasonic standing wave radioactive wastewater treatment device for collecting and treating suspended radioactive oxide particles in an acoustic standing wave field by an ultrasonic separating technology.
CN 201 537 610 U discloses a nuclear power station radioactive decontamination plant and particularly discloses a main pump ultrasonic cleaning device, wherein the main pump ultrasonic cleaning device comprises a cylinder body, vertical ultrasonic transducers, a fluiddischarge tube, horizontal ultrasonic transducers, a stop valve and an ultrasonic generator.
US 8 881 592 B2 relates to an ultrasound treatment system using high-intensity focused ultrasound and, more particularly, to an ultrasound probe of the ultrasound treatment system which easily performs manufacturing and maintenance processes.

### [Disclosure]

### [Technical Problem]

Accordingly, the present invention was invented in view of the matters described above, and an objective of the present invention is to provide a high-intensity focused ultrasound apparatus and method for finely and completely decontaminating solid radioactive waste by focusing ultrasonic waves on the solid radioactive waste.

### [Technical Solution]

To achieve the objective of the present invention, an ultrasound apparatus and method for decontaminating solid radioactive waste is disclosed, comprising the features of the independent claims. Advantageous embodiments are subject matter of the dependent claims.

### [Advantageous Effects]

According to the high-intensity focused ultrasound apparatus and method of the present invention, solid radioactive waste can be finely and completely decontaminated by focusing ultrasonic waves on the solid radioactive waste.

### [Description of Drawings]

FIG. 1 is a view illustrating an ultrasound apparatus according to an embodiment of the present invention.
FIG. 2 is a view illustrating ultrasonic generators accommodated in a coupling container of the ultrasound apparatus shown in FIG. 1.
FIG. 3 is an exploded view illustrating main components of the ultrasound apparatus shown in FIG. 1.
FIG. 4 is a vertical cross-sectional view illustrating the ultrasound apparatus of the present invention.
FIG. 5 is a view illustrating a state in which ultrasonic waves generated from the ultrasonic generators shown in FIG. 4 are focused.
FIG. 6 is a view illustrating a state in which radioactive waste is decontaminated using the ultrasound apparatus of the present invention.
FIG. 7 is a view illustrating support bars for holding radioactive waste according to the present invention.
FIG. 8 is a view illustrating that the radioactive waste shown in FIG. 6 can be moved in a horizontal or vertical direction using the support bars.
FIG. 9 is a view illustrating that radioactive waste can be rotated using the support bars of the present invention.

### [Mode for Invention]

Hereinafter, configurations and operations of the present invention will be described in detail according to preferred embodiments with reference to the accompanying drawings. When allocating reference numerals to elements in the drawings, like elements are denoted, if possible, with like reference numerals even though the elements are illustrated in different drawings.

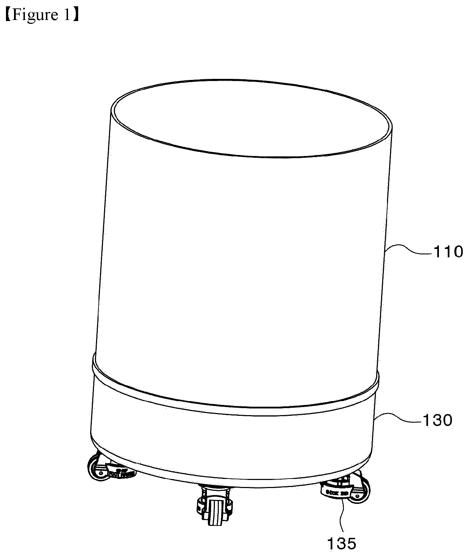

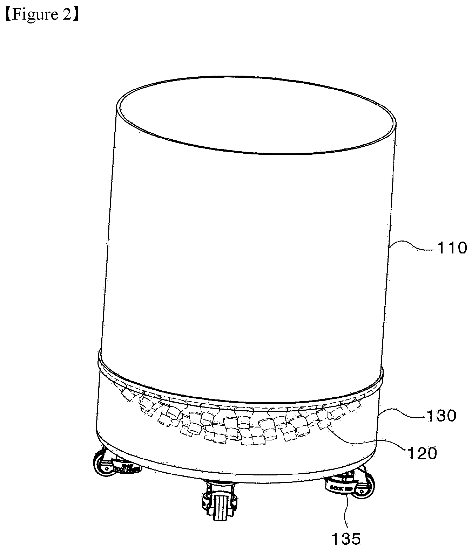

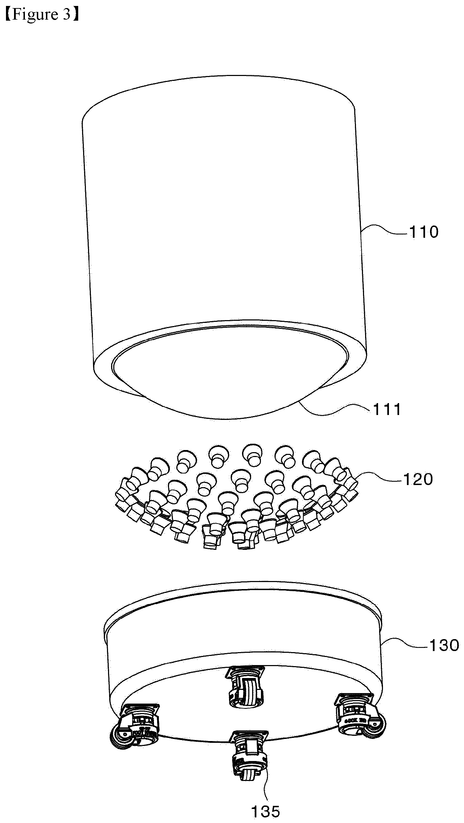

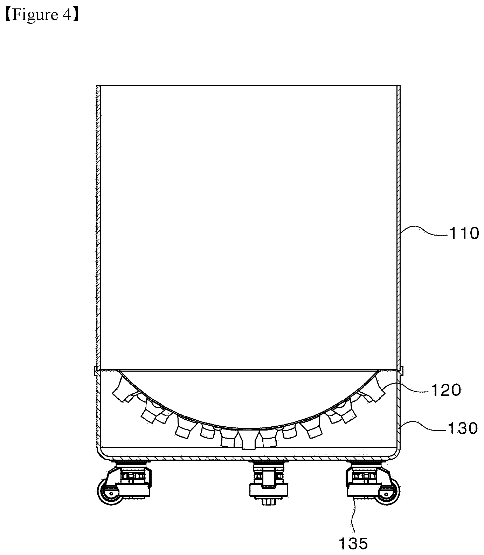

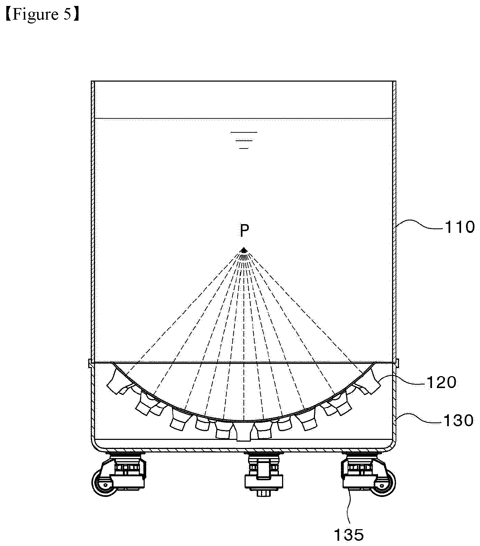

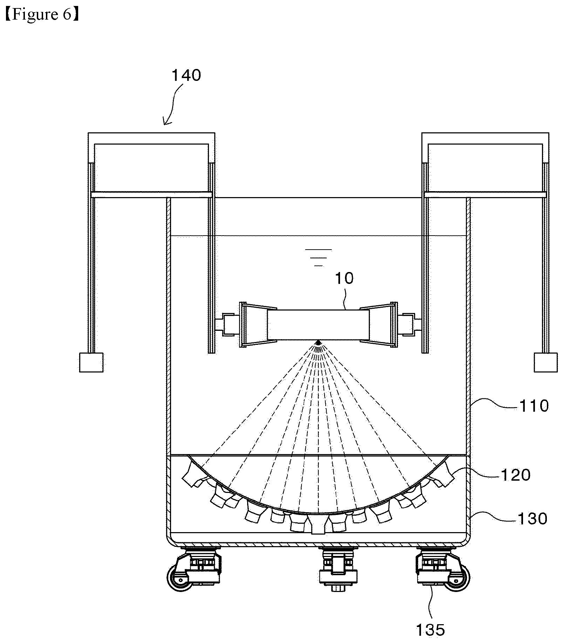

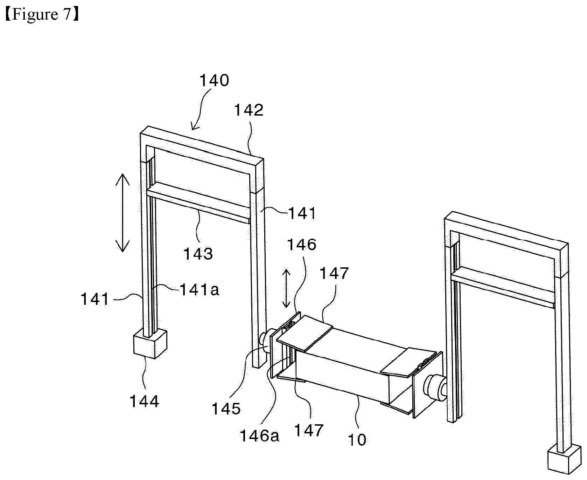

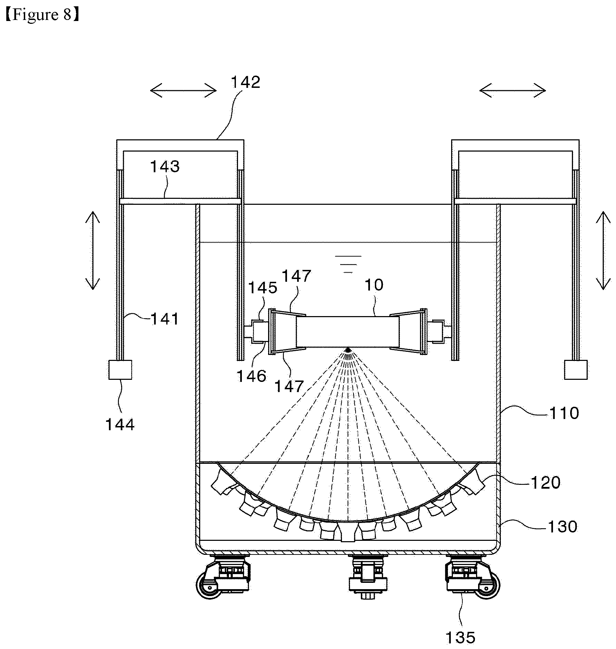

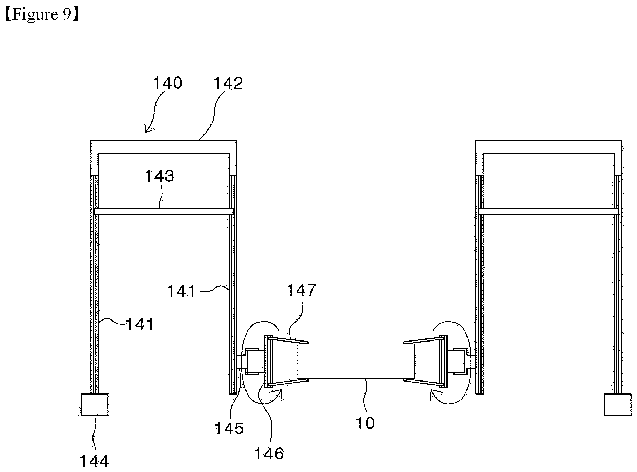

FIG. 1 is a view illustrating an ultrasound apparatus according to an embodiment of the present invention. FIG. 2 is a view illustrating ultrasonic generators 120 accommodated in a coupling container 130 of the ultrasound apparatus shown in FIG. 1. FIG. 3 is an exploded view illustrating main components of the ultrasound apparatus shown in FIG. 1. FIG. 4 is a vertical cross-sectional view illustrating the ultrasound apparatus of the present invention. FIG. 5 is a view illustrating a state in which ultrasonic waves generated from the ultrasonic generators 120 shown in FIG. 4 are focused. FIG. 6 is a view illustrating a state in which solid radioactive waste 10 is decontaminated using the ultrasound apparatus of the present invention. FIG. 7 is a view illustrating support bars 140 for holding the solid radioactive waste 10 according to the present invention. FIG. 8 is a view illustrating that the solid radioactive waste 10 shown in FIG. 6 can be moved in a horizontal or vertical direction using the support bars 140. FIG. 9 is a view illustrating that the solid radioactive waste 10 can be rotated using the support bars 140 of the present invention.

Referring to FIGS. 1 to 5, the ultrasound apparatus for decontaminating solid radioactive waste of the present invention (hereinafter referred to as ultrasound apparatus) includes a container 110, the ultrasonic generators 120, the coupling container 130, wheels 135, and the support bars 140.

The container 110 has a cylindrical shape with an open top and an accommodation space therein. A lower surface 111 of the container 110 has a hemispherical shape which is downwardly convex.

The ultrasonic generators 120 are devices for generating ultrasonic waves. The ultrasonic generators 120 are attached to the outer side of the lower surface 111 of the container 110 and are apart from each other at predetermined intervals therebetween.

Ultrasonic waves generated from the ultrasonic generators 120, which are arranged on the lower surface 111 having a hemispherical shape, may be focused on one point in the container 110. The focusing point of the ultrasonic generators 120 may be adjusted by varying the curvature of the lower surface 111 of the container 110.

The coupling container 130 is coupled to a lower portion of the container 110 to accommodate and protect the ultrasonic generators 120. The wheels 135 are installed on a lower portion of the coupling container 130 such that the ultrasound apparatus may move.

Ultrasound decontamination apparatuses of the related art are configured to generate weak ultrasonic waves and are thus limited to cleaning only the surface of radioactive waste. Therefore, ultrasound decontamination apparatuses of the related art are not suitable for performing fine and high-quality decontamination by penetration through the surfaces of metals.

According to the present invention, the container 110 is filled with water, and solid radioactive waste 10 is put into water. Then, the solid radioactive waste 10 is decontaminated using ultrasonic waves generated from the ultrasonic generators 120.

Ultrasonic waves generated from the ultrasonic generators 120 attached to the hemispherical lower surface 111 of the container 110 are focused on one point P to maximize the intensity of the ultrasonic waves, and thus the ultrasonic waves may penetrate the surfaces of metals and decontaminate even fine particles. Therefore, the solid radioactive waste 10, which cannot be decontaminated but only be cleaned in the related art, can be decontaminated finely and completely.

Accordingly, the solid radioactive waste 10 may be easily treated with low costs, and secondary radioactive byproducts may be produced in relatively small amounts compared to other physical decontamination methods, thereby realizing eco-friendly decontamination.

As shown in FIG. 6, according to the present invention, in the method for decontaminating solid radioactive waste using ultrasonic waves, the container 110 having a cylindrical shape with an open top and a downwardly-convex hemispherical lower portion is first prepared.

Next, the ultrasonic generators 120 are attached to the outer surface of the lower portion of the container 110 such that the ultrasonic generators 120 may be apart from each other at predetermined intervals.

Next, the container 110 is filled with water, and then solid radioactive waste 10 is put into water.

Next, the solid radioactive waste 10 is decontaminated by focusing ultrasonic waves generated from the ultrasonic generators 120 on one point in the container 110. The ultrasonic waves are focused on the surface of the solid radioactive waste 10.

The surface of the solid radioactive waste 10 is placed at the point on which the ultrasonic waves are focused, and thus the intensity of the ultrasonic waves is maximized. Therefore, the solid radioactive waste 10, which is hardly decontaminated by methods of the related art, may be easily decontaminated.

FIG. 7 shows the support bars 140 for supporting the solid radioactive waste 10 in water during decontamination.

Each of the support bars 140 includes: two vertical members 141 extending in a vertical direction and positioned at outer and inner sides in parallel with each other; and a horizontal member 142 connecting upper end portions of the two vertical members 141.

Rails 141a extending in the vertical direction are formed on inner surfaces of the two vertical members 141, and a movable member 143 is inserted into the rails 141a of the two vertical members 141 which are parallel to each other such that the movable member 143 may be moved along the rails 141a. After the movable member 143 is moved along the rails 141a to a given position, the movable member 143 may be fixed to the position by increasing friction between the movable member 143 and the rails 141a.

A weight 144 may be connected to a lower end portion of the outer one of the vertical members 141. The weight 144 applies a load to the vertical members 141 such that the support bar 140 may easily support the solid radioactive waste 10.

A hinge 145 is connected to a lower portion of the inner one of the vertical members 141, and a support part 146 is rotatably connected to the hinge 145.

A second rail 146a is formed on an inner surface of the support part 146, and a holder 147 is connected to the second rail 146a. The holder 147 includes an upper holder and a lower holder, and each of the upper and lower holders may be inserted into the second rail 146a and moved along the second rail 146a. After the holder 147 is moved along the second rail 146a to a given position, the holder 147 may be fixed to the position by increasing friction between the holder 147 and the second rail 146a.

The upper and lower holders of the holder 147 are used to hold and support an end portion of the solid radioactive waste 10. The upper holder and the lower holder of the holder 147 may be moved along the second rail 146a to support solid radioactive wastes 10 having various sizes.

Two support bars 140 may be supported on a wall surface of the container 110 to support the solid radioactive waste 10 put into water filled in the container 110.

Referring to FIG. 8, in a state in which the movable members 143 are supported on an upper end of the container 110, ultrasonic waves may be focused while moving the support bars 140 horizontally and vertically according to the size of the solid radioactive waste 10 as indicated with arrows.

As shown in FIG. 9, the holders 147 connected to the support parts 146 may be rotated on the hinges 145, and thus the solid radioactive waste 10 may be rotated to a desired angle in a supported state.

As described above, in a state in which the solid radioactive waste 10 is held on the support bars 140, the solid radioactive waste 10 may be moved horizontally and vertically and may be rotated. That is, according to the shape and size of the solid radioactive waste 10, the solid radioactive waste 10 may be moved to the point on which ultrasonic waves generated from the ultrasonic generators 120 are focused.

The present invention is not limited to the embodiments described above, and it will be apparent to those of ordinary skill in the art that various modifications or variations may be made without departing from the technical idea and scope of the present invention.

### (Descriptions of reference numerals)

110: container
120: ultrasonic generator
130: coupling container
135: wheel
140: support bar
141: vertical member
141a: rail
142: horizontal member
143: movable member
144: weight
145: hinge
146: support part
146a: second rail
147: holder

## Claims

1. An ultrasound apparatus for decontaminating solid radioactive waste, the ultrasound
apparatus comprising:
a container (110) having a cylindrical shape with an open top; and
a plurality of ultrasonic generators (120) attached to an outer surface of a lower portion of the container (110) and apart from each other at predetermined intervals,
wherein in a state in which the container (110) is filled with water, solid radioactive waste is put into the water, and the ultrasound apparatus decontaminates the solid radioactive waste by using ultrasonic waves generated from the plurality of ultrasonic generators (120),
**characterized in that**
the lower portion of the container (110) has a downwardly-convex hemispherical shape, and
the plurality of ultrasonic generators (120) are attached to the hemispherical lower portion of the container such that ultrasonic waves generated from the plurality of ultrasonic generators are focused on one point in the container.

2. The ultrasound apparatus of claim 1, further comprising:
a coupling container (130) coupled to the container (110) to accommodate the plurality of ultrasonic generators (120); and
wheels (135) installed on a lower portion of the coupling container (130).

3. A method for decontaminating solid radioactive waste using ultrasonic waves, the
method comprising:
preparing a container (110) having a cylindrical shape with an open top and a downwardly-convex hemispherical lower portion;
attaching a plurality of ultrasonic generators (120) to an outer surface of the lower portion of the container (110) such that the plurality of ultrasonic generators (120) are apart from each other at predetermined intervals;
putting solid radioactive waste into water filled in the container (110); and
decontaminating the solid radioactive waste by focusing ultrasonic waves generated from the plurality of ultrasonic generators (120) on one point in the container.

## Patentansprüche

1. Ein Ultraschallgerät zur Dekontaminierung festen radioaktiven Abfalls, das Ultraschallgerät umfassend:
einen Behälter (110), der eine zylindrische Form mit einer offenen Oberseite hat; und
eine Vielzahl von Ultraschallgeneratoren (120), die an einer Außenfläche eines unteren Abschnitts des Behälters (110) angebracht und in vorbestimmten Abständen voneinander beabstandet sind,
wobei in einem Zustand, in dem der Behälter (110) mit Wasser gefüllt ist, fester radioaktiver Abfall in das Wasser gegeben wird und das Ultraschallgerät den festen radioaktiven Abfall unter Verwendung von Ultraschallwellen dekontaminiert, die von der Vielzahl von Ultraschallgeneratoren (120) erzeugt werden,
**dadurch gekennzeichnet, dass**
der untere Abschnitt des Behälters (110) eine nach unten konvexe halbkugelförmige Form hat und
die Vielzahl von Ultraschallgeneratoren (120) an dem halbkugelförmigen unteren Abschnitt des Behälters so angebracht sind, dass von der Vielzahl von Ultraschallgeneratoren erzeugte Ultraschallwellen auf einen Punkt in dem Behälter fokussiert sind.

2. Das Ultraschallgerät nach Anspruch 1, ferner umfassend:
einen Kopplungsbehälter (130), der mit dem Behälter (110) verbunden ist, um die Vielzahl von Ultraschallgeneratoren (120) aufzunehmen; und
Räder (135), die an einem unteren Abschnitt des Kopplungsbehälters (130) installiert sind.

3. Ein Verfahren zur Dekontaminierung festen radioaktiven Abfalls unter Verwendung von Ultraschallwellen, das Verfahren umfassend:
Vorbereiten eines Behälters (110), der eine zylindrische Form mit einer offenen Oberseite und einem nach unten konvexen halbkugelförmigen unteren Abschnitt hat;
Anbringen einer Vielzahl von Ultraschallgeneratoren (120) an einer Außenfläche des unteren Abschnitts des Behälters (110), so dass die Vielzahl von Ultraschallgeneratoren (120) in vorbestimmten Abständen voneinander beabstandet sind;
Geben festen radioaktiven Abfalls in Wasser, welches in den Behälter (110) gefüllt ist; und
Dekontaminieren des festen radioaktiven Abfalls durch Fokussieren von Ultraschallwellen, die von der Vielzahl von Ultraschallgeneratoren (120) erzeugt werden, auf einen Punkt in dem Behälter.

## Revendications

1. Appareil à ultrasons pour décontaminer des déchets radioactifs solides, l'appareil à ultrasons comprenant :
un conteneur (110) ayant une forme cylindrique avec un haut ouvert ; et
une pluralité de générateurs d'ultrasons (120) fixés à une surface extérieure d'une partie inférieure du conteneur (110) et espacés les uns des autres à des intervalles prédéterminés,
dans lequel, dans un état dans lequel le récipient (110) est rempli d'eau, des déchets radioactifs solides sont placés dans l'eau, et l'appareil à ultrasons décontamine les déchets radioactifs solides en utilisant des ondes ultrasoniques générées par la pluralité de générateurs d'ultrasons (120),
**caractérisé en ce que**
la partie inférieure du conteneur (110) a une forme hémisphérique convexe vers le bas, et
la pluralité de générateurs d'ultrasons (120) sont fixés à la partie inférieure hémisphérique du conteneur de sorte que les ondes ultrasoniques générées par la pluralité de générateurs d'ultrasons sont concentrées sur un point du conteneur.

2. L'appareil à ultrasons de la revendication 1, comprenant en outre :
un conteneur de couplage (130) couplé au conteneur (110) pour accueillir la pluralité de générateurs d'ultrasons (120) ; et
des roues (135) installées sur une partie inférieure du conteneur de couplage (130).

3. Méthode pour décontaminer des déchets radioactifs solides en utilisant des ondes ultrasoniques, comprenant :
préparer un conteneur (110) ayant une forme cylindrique avec un haut ouvert et une partie inférieure hémisphérique convexe vers le bas ;
fixer une pluralité de générateurs d'ultrasons (120) à une surface extérieure de la partie inférieure du conteneur (110) de sorte que la pluralité de générateurs d'ultrasons (120) sont espacés les uns des autres à des intervalles prédéterminés ;
placer des déchets radioactifs solides dans de l'eau remplie dans le conteneur (110) ; et
décontaminer des déchets radioactifs solides en concentrant des ondes ultrasoniques générées par la pluralité de générateurs d'ultrasons (120) sur un point dans le conteneur.
